# EUROPEAN PATENT APPLICATION

(11) **EP 4 206 362 A1**
(43) Date of publication of application: **05.07.2023**
(21) Application number: 21218096.2
(22) Date of filing: 29.12.2021
(51) Int. Cl.: C25C 3/16, B23P 6/00

(54) **METHOD AND INSTALLATION FOR THE MAINTENANCE OF AN ANODE YOKE OF A HALL-HÉROULT CELL**

(71) Applicant: Dubai Aluminium PJSC, Dubai (AE)
(72) Inventor: DEVADIGA, NAGARAJ SANJEEVA, SHARJAH (AE); ABDALLA, ABDALLA AHMED MOHAMED ABDALLA ALZAROONI, SHARJAH (AE); NEUMANN, KARL-ERIK, ABU DHABI (AE); ALAWADHI, MAHMOOD MOHAMMAD AHMAD ABDULMALIK ALAWADHI MAHMOOD ALAWADHI, DUBAI (AE)
(74) Representative: Schmidt, Martin Peter

(57) **Abstract**

A maintenance method of an anode yoke (1; 101) for use in an electrolytic Hall-Heroult cell, said yoke comprising a body (10; 110) and a plurality of arms (12; 112), wherein each arm comprises a distal stub (20; 120), intended to be inserted in a stub hole provided in said anode,
wherein at least one stub (22) is in a worn state, and wherein a yoke having at least one worn stub is called a "worn yoke",
said method comprising:
- handling said worn yoke, provided with said worn stub (22), from a storage station (6) to a working station (7),
- removing a worn end (23) of said stub, so as to form a stub base (26; 126),
- holding a spare part (24), the size and shape of said spare part being adapted to form a new stub (28; 128) with said base,
- locally softening said base and said spare part, thereby forming a so-called softened zone (25; 125) of said spare part, at the vicinity of a free face (24'; 124') of said spare part, and a softened zone (27; 127) of said base, at the vicinity of a free face (26'; 126') of said base facing said free face of spare part,
- bringing into contact said base and said spare part,
- so that these softened zones, being in mutual contact, might form said new stub (28; 128).

## Description

### Technical field of the invention

The invention relates to the technical field of electrolysis in molten salts for making aluminium using the Hall-Heroult process, and to plants using said process. More precisely, the invention relates to the maintenance of anode hangers, and still more precisely to the maintenance of anode yokes in such an electrolysis plant. In particular, the invention proposes a new method for replacing anode stubs. This method uses a specific welding protocol and largely relies on robots.

### Prior art

The Hall-Heroult process is the only continuous industrial process for producing metallic aluminium from aluminium oxide. Aluminium oxide (Al₂O₃) is dissolved in molten cryolite (Na₃AlF₆), and the resulting mixture (typically at a temperature comprised between 940 °C and 970 °C) acts as a liquid electrolyte in an electrolytic cell. An electrolytic cell (also called "pot") used for the Hall-Heroult process typically comprises a steel shell (so-called pot shell), a lining (comprising refractory bricks protecting said steel shell, and cathode blocks usually made from graphite, anthracite or a mixture of both), and a plurality of anodes (usually made from carbon) that plunge into the liquid electrolyte contained in the volume defined by the cathode bottom and a side lining made from carbonaceous material. Anodes and cathodes are connected to external busbars. An electrical current is passed through the cell (typically at a voltage between 3.5 V and 5 V) which electrochemically reduces the aluminium oxide, split in the electrolyte into aluminium ions and oxygen ions, then into aluminium at the cathode and carbon dioxide after reacting with the carbon at the anode. The resulting metallic aluminium is not miscible with the liquid electrolyte, has a higher density than the liquid electrolyte and will thus accumulate as a liquid metal pad on the cathode surface below the electrolyte from where it needs to be removed from time to time, usually by suction into a crucible.

Anodes used in the Hall-Héroult process are prebaked cuboids made from a carbonaceous material. The anodes are fixedly connected to so-called anode hangers. They serve two different purposes, namely to keep the carbon anodes at a predetermined distance from the cathode, and to carry the electrical current from an anode busbar (also called "anode beam") down to the carbon anodes. Anode hangers are fixed to the overhanging anode beam in a detachable manner using clamps. They comprise an upper part called "anode rod" or "anode stem", which is connected to the anode beam, and a lower part, called "anode yoke". The anode yoke has a number of arms each of which terminates in a cylindrical stub (so-called "anode stub") that is embedded in pre-formed stub holes of the carbon anodes and fixed with cast iron acting as temperature-resistant, electrically conductive glue; this process is called "anode rodding" or "anode casting".

Anode rods are usually made from aluminium, while anode yokes are usually made from low carbon structural steel. The connection between the anode rod and the anode yoke is achieved by welding: the anode rod is welded to the aluminium portion of an aluminium - steel transition joint, and the anode yoke is welded to the steel portion of said transition joint. Such transition joints are commercially available products which are typically manufactured by co-rolling or explosion welding of an aluminum plate and a steel plate. The entity "anode rod plus anode yoke" is sometimes called "anode hanger", and the entity "anode hanger plus anode" is called "anode assembly".

Anode yokes (also called « anode spiders » when all stubs are not in one line) are typically made from cast steel. This material ensures a long lifetime, in excess of two decades, but its electrical resistivity is rather high, typically of the order of about 15 - 20 µΩcm at room temperature. The electrical resistance of the anode assembly is very important factor because any additional electrical resistance in an electrolytic cell generates Ohmic losses that increase the energy consumption of the process and have a direct and immediate impact on the production cost. These losses have been estimated in terms of voltage drop to be of the order of 0.30 V for anode assemblies (see B. Woodrow, "Anode stub replacement", Aluminium 5/2007, p. 71-73), which is broken down as follows: clamp drop about 0.02 V, rod drop about 0.08 V (which can be broken down as follows : aluminium rod: 0.05 V; transition joint: 0.01 V; steel yoke: 0.02 V), stub - carbon drop about 0.12 V, carbon drop about 0.08 V. These values indirectly depend on the current density of the cell: the anode block drop is proportional to the height of the anode block, and bigger anodes need bigger anode yokes. These values also depend on the design of the anode assemblies; the figures given in the cited publication should be viewed as an order of magnitude.

Conventionally, the cross section of the anode yoke is substantially constant over its various portions. More recently, a novel design has been proposed (see for instance WO 2019/123131) in which the anode yoke has a reduced cross sectional area in the upper part of the stub. More precisely, the stub is divided into two coaxial portions: a first, lower portion intended to be connected to the anode (and that actually plunges into the anode block), having substantially the shape of a circular cylinder or of a slightly tronconical cylinder (i.e. a cylinder the diameter of which may be somewhat smaller at its bottom than at its top), and a second, upper portion having a smaller cross sectional area than said first portion; said first portion is called the stub.

Anode stubs are subject to thermally induced deformation, and may also be subject to erosion caused by the molten bath in which the anodes are plunged during operation; this erosion may occur in certain abnormal situations such as anode effects when the height of the molten bath increases accidentally (this is sometimes called "bath attack" or "stub wash"). Anode stubs may also be subject to excess oxidation if the upper part of the anode is not well protected against ambient air by a mix of crushed bath and alumina powder.

Typical stub repair operations include stub straightening and stub milling. Stub straightening includes aligning the deformed stubs to the pattern of stub holes provided in the new anodes. Devices for stub straightening are described in US 4,667,501 (Aluminum Company of America) and US 5,268,083 (Westfalia Becorit Industrietechnik GmbH). Eventually, after a certain number of milling and repair operations, anode stubs will have to be replaced. NL 8 301 350 (Aluminium Delfzijl B.V.) discloses a process in which anodes are removed from an anode assembly, the spent anode stub is removed from the anode yoke by flame cutting, and a new stub is welded to the anode yoke; during this semi-automatic process the anode assembly remains attached to the overhead rail conveyor.

Various types of saws have been used, too, for removing spent anode stubs; as described in the paper by Woodrow, cited above, they provide cleaner surfaces than flame cutting. This paper also teaches that it is advantageous to have the anode hanger hang in the overhead conveyor during the whole process, as this avoids unhooking and handling of the anode hanger. As a consequence, the sawing stations have been adapted for providing horizontal cuts.

The present invention is directed to an improved and simplified method and installation for anode stub replacement. As the anode stub contributed to Ohmic losses when operating a Hall-Heroult electrolytic cell, as explained above, it is important to ensure excellent reproducibility of the stub replacement process and each of the individual operations involved in this process. It is also desirable to simplify the anode stub replacement process in order to keep maintenance cost down.

### Objects of the invention

The present invention relates, among other objects, to anode yokes for use in an electrolytic cell for the electrolytic production of aluminium using the Hall-Heroult process, said yoke being intended to mechanically and electrically link at least one carbon anode and an anode rod, said yoke comprising a body intended to be connected to said anode rod, and a plurality of arms which extends each from said body, each arm being intended to be connected to said anode by means of an anode stub that is welded to said anode yoke. More precisely, the present invention related to a novel method and installation for replacing said anode stubs.

The problem is solved by several means that are preferably used in combination.

According to a first aspect of the invention, the object of the invention is a maintenance method of an anode yoke for use in an electrolytic cell for the electrolytic production of aluminium using the Hall-Heroult process, said yoke being intended to mechanically and electrically link at least one carbon anode and an anode rod, said yoke comprising:
- a body intended to be connected to said anode rod, and
- a plurality of arms which extends each from said body, each arm being intended to be connected to said anode, wherein each arm comprises a distal portion (so-called "stub", intended to be inserted in an orifice (so-called "stub hole") provided in said anode,
   wherein at least one stub is a so-called worn stub being in a worn state, and wherein a yoke having at least one worn stub is called a "worn yoke",
   said method comprising:
      - handling said worn yoke, provided with said worn stub, from a storage station to a working station,
      - removing a worn end of said stub, so as to form a stub base,
      - holding a spare part, the size and shape of said spare part being adapted to form a new stub with said base,
      - locally softening said base and said spare part, thereby forming a so-called softened zone of said spare part, at the vicinity of a free face of said spare part, and a so-called softened zone of said base, at the vicinity of a free face of said base facing said free face of spare part,
      - bringing into contact said base and said spare part,
      - so that these softened zones, being in mutual contact, might form said new stub.

In one embodiment of this method, said softening step of said base and said spare part is carried out after said zones have been brought into contact, said step of bringing into contact said zones being carried out in a substantially not molten state of said zones.

Said softening step may comprise rotating at least one of said base and said spare part around its main longitudinal axis, at a rotation speed and during a rotation duration, which are adapted to locally soften said base and said spare part so as to form said softened zones.

In one embodiment of the invention, a preheating step of said base and said spare part is carried out prior to bringing them into contact, at a first range of temperatures, well below melting temperature of said zones.

In another embodiment of the invention, said softening step of said base and said spare part is carried out before step of bringing into contact said zones. The step of softening said base and said spare part can then comprise heating said base and said spare part at a second range of temperature, which is close to the melting temperature of said base and said spare part, so that softened zones are substantially molten zones. It is then advantageous to move said base and spare part with respect to each other, after bringing into contact said substantially molten zones, so as to ease forming new stub.

Bringing into contact said spare part and said base may comprise moving axially (arrow F24; arrow F124) spare part (24 ; 124).

The maintenance method according to the invention may comprise heating or preheating simultaneously said base and said spare part; said heating or preheating said base and said spare part can be achieved with same heating means.

Said handling said yoke can comprise tilting said anode hanger from a first position to a second position. Advantageously, said first position is a vertical position of said anode hanger, whereas second position is a horizontal position of said anode hanger.

Another object of the present invention is a maintenance installation, intended to the maintenance of an anode yoke for use in an electrolytic cell for the electrolytic production of aluminium using the Hall-Heroult process, said yoke being intended to mechanically and electrically link at least one carbon anode and an anode rod, said yoke comprising:
- a body intended to be connected to said anode rod, and
- a plurality of arms, each arm being intended to be connected to said anode, wherein each arm comprises a distal portion (so-called "stub"), intended to be inserted in an orifice (so-called "stub hole") provided in said anode,
   said installation comprising:
   - a storage station storing at least one so called worn yoke comprising at least one stub that is in a so-called worn state,
   - a working station,
   - handling means adapted to handle said worn yoke, from said storage station to said working station,
   - removing means adapted to remove worn end of said stub, so as to form a stub base,
   - a spare station, provided with a plurality of spare parts adapted to cooperate with said stub base,
   - holding means adapted to hold at least one of said spare parts,
   - softening means, adapted for locally soften said base and said spare part, so as to form a so-called softened zone of said spare part, at the vicinity of a free face of said spare part, and a so-called softened zone of said base, at the vicinity of a free face of said base facing said free face of spare part,
   moving means adapted to move at least one of said spare part and base in view of contacting softened zones of said spare part and base, so as to form said new stub.

Said softening means are adapted to rotate at least one of said base and said spare part around its main longitudinal axis, at a rotation speed being high enough to locally soften said base and said spare part so as to form said softened zones (125, 127), said softened zones being substantially not molten zones.

In an advantageous embodiment, said softening means comprise a rotating tool provided with a spindle adapted to engage said spare part.

In another embodiment, said softening means are heating means adapted to heat said base and said spare part, at a temperature which is high enough to form said softened zones being substantially molten zones.

Advantageously, said softening means comprise a robot.

Said spare parts may have at least one different characteristic, amongst which diameter, length, nature of its material.

Said heating means may comprise one single support and two heating elements, each for heating respectively spare part and stub base, or said heating means may comprise one single support and one single heating element, for heating both spare part and stub base.

Still another object of the invention is an aluminium electrolysis plant comprising at least one line of electrolysis cells of substantially rectangular shape, and said plant further comprising means for electrically connecting said cells in series and for connecting the cathodic busbar of a cell to the anode beam of a downstream cell,
characterized in that said plant is equipped with at least a maintenance installation according to the invention.

Another object of the invention is a method for making aluminium by the Hall-Héroult electrolysis process, characterized in that said method is carried out in an aluminium electrolysis plant according to preceding claim.

### Figures

Figures 1 to 17 represent various embodiments of the present invention.
Figure 1 shows a perspective view of an anode yoke which is likely to be submitted to a maintenance method according to a first embodiment of the invention.
Figures 2 and 3 are front views, illustrating stubs of said yoke in respective original and worn states.
Figure 4 is a perspective view, illustrating a maintenance Installation for operating said method according to the invention.
Figure 5 is a front view, analogous to figures 2 and 3, illustrating a stub base obtained after removal of worn end of yoke represented on figure 3.
Figure 6 is a perspective view, analogous to figure 4, showing first stages of maintenance method according to the invention.
Figure 7 is a perspective view, showing at greater scale a heating stage of the method according to the invention.
Figures 8 and 9 are respectively perspective and front views, showing heating means used in the stage of figure 7.
Figures 10 and 11 are respectively perspective and front views, analogous to figures 8 and 9, showing heating means according to a variant of the invention.
Figure 12 is a front view, analogous to figure 5, showing a so-called new stub obtained according to the method according to this first embodiment of the invention.
Figure 13 is a perspective view, analogous to figure 1, partially showing an anode yoke which is submitted to a maintenance method according to a second embodiment of the invention.
Figure 14 is a perspective view, showing in greater details a preheating step of said second embodiment.
Figure 15 is a front view, analogous to figure 11, showing this preheating step.
Figure 16 is a perspective view, showing the welding step of this second embodiment.
Figure 17 is a front view, analogous to figure 12, showing the new stub obtained according to this second embodiment.

The following reference numerals are used throughout the text:

| | | | |
|---|---|---|---|
| 1 | Anode yoke | 10 | Body |
| 12 | Arms | 14 | Anode rod |
| 16 | Anode hanger | 18 | Hole |
| 20 | Anode yoke stub | 22 | Worn stub |
| 23 | Worn end of 22 | 24 | Spare part |
| 26 | Stub base | 26' | Free face of 26. |
| 25,27 | Molten zones of 24 | 28 | New stub |
| 29 | Welding joint | | |
| *L20,D20* | Length and diameter of 20 | *D24* | Distance between 24 and 26 |
| *126* | Length of 26 | | |
| *d24,d26* | Distance between heating member and 24 26 on figure 9 | *d'24,d'26* | Distance between heating member and 24 26 on figure 11 |
| 3 | First robot | 4 | Second robot |
| 5 | Third robot | | |
| 30,40,50 | Base plate of 3,4,5 | 32,42,52 | Body of 3,4,5 |
| 36,46,56 | Distal arm of 3,4,5 | 34,44,54 | Proximal arm of 3,4,5 |
| 38,48,58 | Tool | | |
| *A34,A44, A54* | Rotation axis of 34, 44, 54 | A36,A46, A56 | Rotation axis of 36, 46, 56 |
| *L46, L56* | Longitudinal axis of 46, 56. | | |
| 6 | Storage station | 60 | Conveyor |
| 62 | Mobile railing | 64 | Pins |
| 7 | Working station | | |
| 70 | Tray | 72 | Wedges |
| 8 | Spare station | 80 | Bins |
| 9 | Heating means according to the first embodiment | 95 | Heating means according to the second embodiment |
| 9,90 | Common support | 91,92 | Heating members |
| 95,96 | Support | 97 | Single heating member |
| *D9* | Distance between 91 and 92 | | |
| *fx* | Rotation of element x, with x = 16, 24 | *F24* | Translation of 24 |

### Detailed description

The Hall-Heroult process as such, the way to operate the latter, as well as the general structure and operation of a Hall-Heroult electrolysis cell are known to a person skilled in the art and will not be described here in more detail.

In the present description, the terms "upper" and "lower" refer to mechanical elements in use, with respect to a horizontal ground surface. Moreover, unless otherwise specifically mentioned, "conductive" means "electrically conductive".

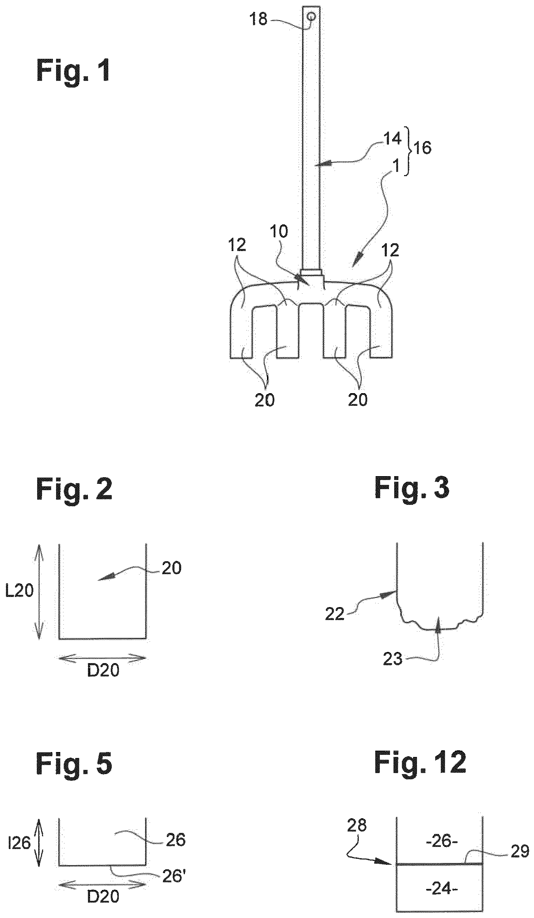

The present invention is particularly directed to anode assemblies. Anode assemblies comprise an anode rod, an anode yoke and one, or in some embodiments two, carbon anode blocks. In a way known as such, as shown on figure 1, an anode yoke referenced **1** as a whole comprises a body **10** as well as a plurality of arms or branches **12.** Said body is intended to be connected to a respective anode rod **14.** In the present example, said body and said rod are integral (typically welded together), so as to form a so-called anode hanger **16.** Each arm **12** is intended to be connected to an anode, which is not shown on the figures and the structure of which is known as such. In this respect the distal portion of each arm, which is cylindrical and is called an anode yoke stub **20,** is inserted in an orifice (so-called stub hole) provided in said anode and fixed with cast iron that is poured into the stub hole, acting upon solidification as a glue.

Carbon anodes blocks are consumed during the electrolysis process and need to be replaced regularly, typically each twenty to thirty days; as an example, for a cell with 18 pairs of anode assemblies there will typically be about two pairs of anodes changed in three days. Anode hangers can be reused for many years, but anode stubs are subject to wear and need to be replaced from time to time.

Figure 2 shows a stub **20** in an original state. Let us note *L20* and *D20* the respective length and diameter of said stub. After a long use, typically superior to several months or years of cumulated service time in an electrolysis cell, the length and / or the diameter of said stub has been significantly reduced, and or its original shape has been substantially modified. This so-called worn stub, referenced **22** on figure 3, does not suit its intended purpose anymore because there is a risk of poor connection to the anode block which may eventually result in the anode block to fall down into the cell. The anode stub therefore needs to be at least partly replaced when it is worn; this is a normal maintenance operation.

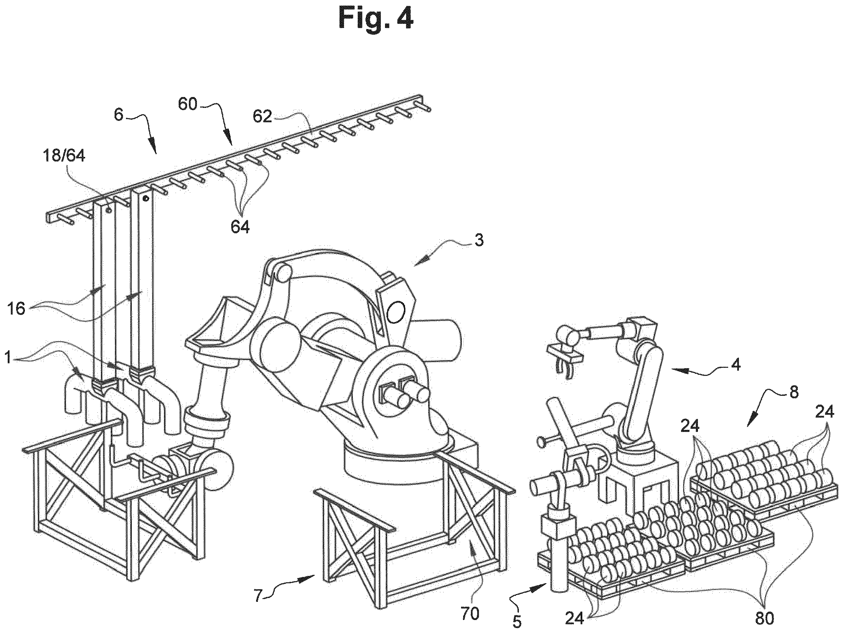

The present invention is particularly directed to the maintenance of anode yokes, and in particular to the replacement of at least part of the stubs belonging to an anode yoke. It proposes a maintenance method, in view of replacing at least part of stub **22.** To this end a maintenance installation, for operating this method, is shown on the figure _4. This installation first comprises three robots, which are mutually distinct. As this will be described hereinafter in greater details, the main function of first robot **3** is to handle and move the anode yoke, the main function of second robot **4** is to hold and displace a spare part, whereas the main function of third robot **5** is to ensure welding between said spare part and stub base of said yoke.

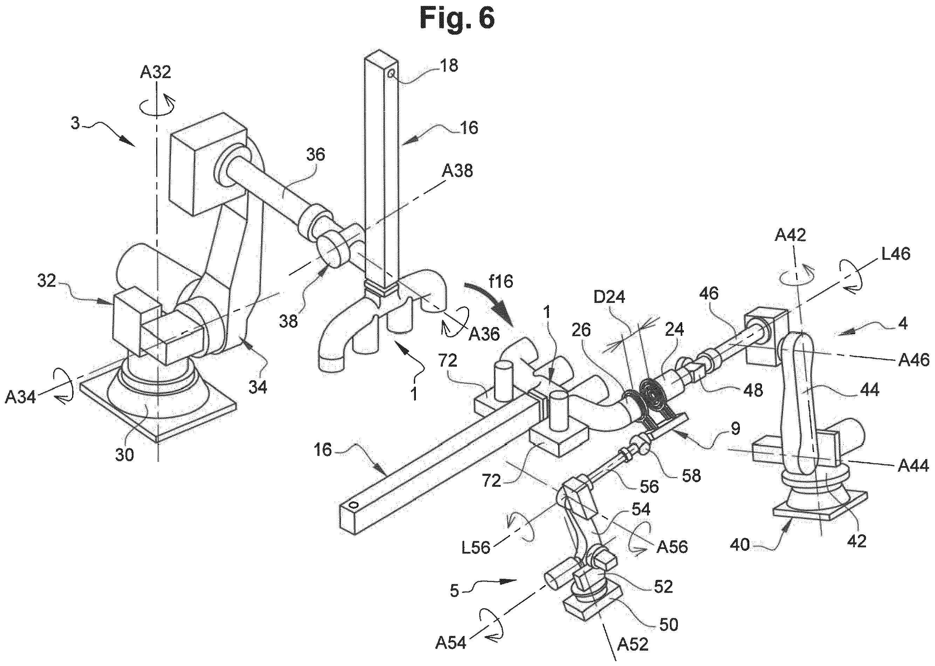

As can be seen on figure 6, robot **3** comprises a base plate **30,** which is attached to the ground. This base plate supports a body **32** which is adapted to rotate around the substantially vertical axis **A32,** with respect to said base plate. A proximal arm **34** is mounted on said body **32,** while being adapted to rotate with respect to the latter, around an axis **A34.** Moreover a distal arm **36** is mounted on said arm **34,** while being adapted to rotate with respect to the latter, around an axis **A36.** Said arm **36** is provided with an appropriate tool **38,** which makes it possible to handle the yoke. In practice said tool grasps the anode rod, mutually attached with said yoke. Moreover said tool **38** is adapted to rotate with respect to arm around axis **A38,** to enable the tilting of said rod and yoke.

Robot **4** comprises a base plate **40,** which is attached to the ground. This base plate supports a body **42** which is adapted to rotate around the substantially vertical axis **A42,** with respect to said base plate. A proximal arm **44** is mounted on said body **42,** while being adapted to rotate with respect to the latter, around an axis **A44.** Moreover a distal arm **46** is mounted on said arm **44,** while being adapted to rotate with respect to the latter, around an axis **A46.** Said arm **46** is also adapted to rotate around its own longitudinal axis **L46.** It is provided with an appropriate tool **48,** which makes it possible to grasp a spare part **24,** the structure of which will be described here after.

Robot **5** comprises a base plate **50,** which is attached to the ground. This base plate supports a body **52** which is adapted to rotate around the substantially vertical axis **A52,** with respect to said base plate. A proximal arm **54** is mounted on said body **52,** while being adapted to rotate with respect to the latter, around an axis **A54.** Moreover a distal arm **56** is mounted on said arm **54,** while being adapted to rotate with respect to the latter, around an axis **A56.** Said arm **56** is also adapted to rotate around its own longitudinal axis **L56.** It is provided with an appropriate tool **58,** which makes it possible to hold heating means **9,** the structure of which will be described here after.

According to an advantageous feature of the invention, robots **3** to **5** are distinct and have different characteristics. In particular these robots have different lifting powers, each adapted for their respective task.

Indeed first robot **3** has advantageously high lifting power, which makes it possible to lift and move the anode hanger.

Moreover second robot **4** has advantageously a so-called intermediate lifting power. Indeed this robot does not need to be adapted to lift heavy loads, but only spare parts, the weight of which is far inferior to that of anode hanger.

Finally third robot **5** has advantageously a low lifting power. Indeed said robot only needs to be adapted for the lifting of a rather light mechanical element, such as heating means.

The installation according to the invention further comprises a storage station, referenced as a whole as **6.** This station comprises a conveyor **60** which is equipped with a mobile rail **62,** provided with pins **64.** The latter makes it possible to suspend and displace anode yokes to be treated according to the method of the invention. In this respect the anode hangers, which integrate said yokes, are provided with holes **18** for fixation on above mentioned pins **64.** Such conveyors **60** are known as such.

The installation according to the invention further comprises a working station, referenced as a whole as **7.** This station comprises a tray **70,** adapted to support an anode hanger in the horizontal position thereof. This tray is also provided with wedges **72,** the function of which is to maintain said hanger on said tray. In particular said wedges avoid any rear motion of the yoke, opposite to heating means.

The installation according to the invention further comprises a so called spare station, referenced as a whole as **8.** Said spare station is equipped with several receiving bins **80,** each allowing the reception of a plurality of spare parts **24.** Each spare part is intended to be attached on a stub base, as will be explained in further detail here after. In an advantageous embodiment, at least some spare parts are mutually different. Different spare parts have at least one mutually different characteristic, amongst which diameter, length, the nature of its material. This makes it possible to suit different kinds of stub bases.

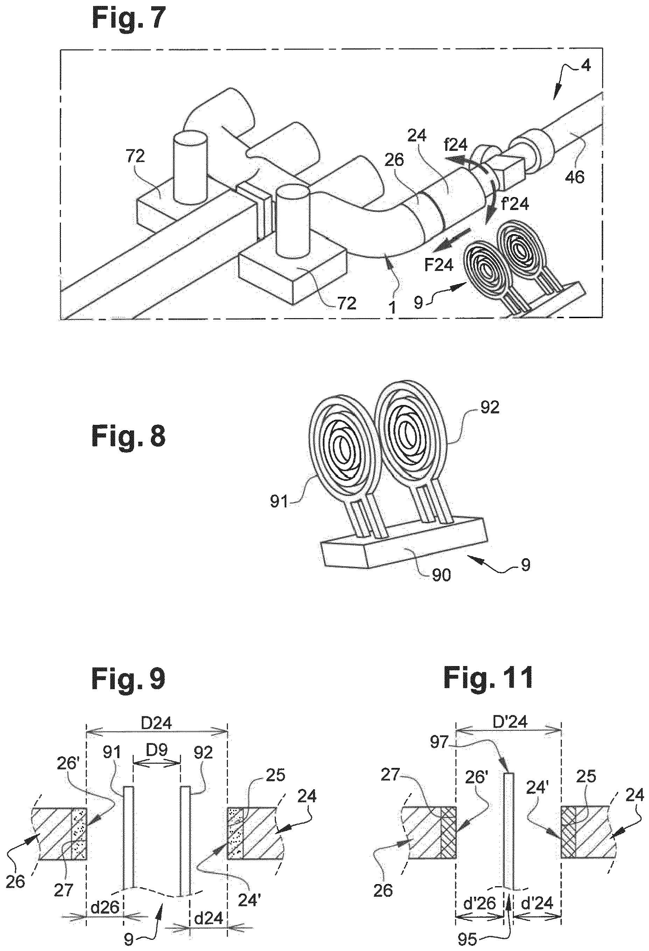

Figures 8 and 9 illustrate a first embodiment of heating means according to the invention. Said heating means **9** comprise a common support **90,** as well as two heating members **91** and **92.** Said members, which are typically identical, are known as such. They are formed by coils, which are adapted to be electrically heated; such heating coils are known as such. The closest distance D9, between both members **91** and **92,** is typically between 0 mm and about 200 mm.

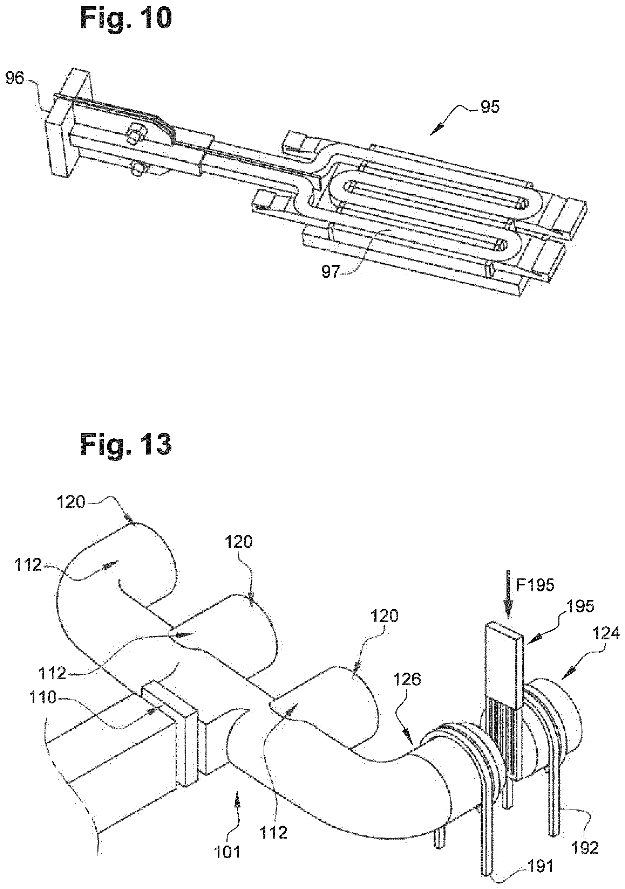

Figures 10 and 11 illustrate a second embodiment of heating means according to the invention. Said heating means **95** comprise a support **96,** as well as one single heating member **97.** The latter is formed by a coil, adapted to be electrically heate.

An example of maintenance method according to the invention, carried out with the above described installation, will now be explained.

This process is carried out on an anode hanger **16** of figure 1, comprising the anode rod **14** and the anode yoke **1.** At this stage the remains of the anode have been removed from the anode yoke, in a way known as such. Anode hangers are usually conveyed vertically on the conveyor **60,** the upper part of the anode rod being fixed to said rail 62 due to the cooperation between pins **64** and holes **18.** In a not shown step the anode yoke is first cleaned, according to known procedures. In a further step, also not shown, the stub to be at least partly replaced is sawed, according to known procedures.

As shown on figure 5, this sawing operation makes it possible to remove the worn end of the stub, which is referenced **23** on figure 3. Thereafter, a so-called stub base **26** is formed, which is illustrated on this figure 5. Said base **26** has the same diameter D20 as an original stub. However, its length *l26* is far inferior to L20, due to the removal of worn part.

Said anode hanger **16** is then seized by the distal arm **36** of the first robot **3,** and released from the conveyor **60.** Afterwards, as shown on figure 6, first robot **3** tilts anode hanger from its vertical position of figure 4 to a horizontal position, according to arrow *f16* on figure 6. This robot places then said anode hanger on the tray **70** of working station **7,** which is not illustrated on figure 6 but which is shown on figure 7. In particular said yoke is firmly maintained due to wedges **72.** In this respect, said yoke cannot be submitted to a reverse motion, which would be opposite to the location of a spare part **24** intended to be attached on the stub base 26, as will be described hereafter.

As further shown on said figure 6, second robot **4** grasps an appropriate spare part **24.** The relevant spare part is chosen as a function of the dimensions and or the nature of stub base. Robot **4** places spare part **24** so that it faces stub base **26,** the distance D24 separating facing parts of these elements being advantageously chosen between 0 mm and about 300 mm. Once spare part and stub base are mutually positioned, third robot **5** holds heating means **9,** so as to place the latter between said spare part and said stub base.

As further shown on figure 9, the distance d24 and d26 between adjacent faces of each heating member **9,** and respectively spare part and stub base, is chosen between 0 mm and about 300 mm. In a typical manner, the duration of the heating phase is chosen between 0 mm and about 300 mm. Those skilled in the art will adapt this duration, as well as above distances d24 and *d26,* so as to ensure a proper welding of spare part and stub base. In case heating means **95** is used, analogous distances *D'24,* as well as *d'24* and d'26 (see figure 11) are chosen in the same range as above.

In a typical way, immediately after heating phase, the temperature T24 of free faces **24'** and **26'** is close to the melting temperature Tm of the material which constitutes elements 24 and 26, bearing in mind that T24 is slightly inferior to Tm. This heating step makes it possible to form so-called molten zones **25** and **27,** located in the vicinity of respectively free faces **24'** and **26'.** These molten zones, which are schematically illustrated on figures 9 and 11, are zones where material is softened. They are also called softened zones. The term "molten zone" is used here in the usual sense related to a fusion welding process.

Then third robot **5** removes heating means **9,** while second robot **4** moves forward spare part **24,** along arrow **F24** on figure 7, so that it comes into contact with stub base **26.** So as to ensure a reliable welding, spare part is driven into motion around a substantially horizontal axis, while contacting stub base. Typically said spare part is rotated first along one given direction according to arrow f24 on figure 7, then along the opposite direction according to arrow f'24 on this same figure. These rotations correspond to little angular sectors, typically inferior to 360°, in particular about 90°. The rotation speed of these motions may also be rather slow. At the end of this stage, spare part and stub base are mutually attached by welding. Said spare part and said stub base form a so-called new stub **28,** shown on figure 12. On this figure the welding joint, which makes it possible to connect spare part and stub base, is referenced **29.**

Figures 13 to 17 describe a second embodiment of the invention. On these figures the mechanical elements, which are analogous to those of the first embodiment, are given the same references added with number **100.**

This second embodiment encompasses some of the steps of the first embodiment, which are therefore not described. These steps comprise the sawing of the stub to be replaced, the tilting of anode hanger from its vertical position to its horizontal position, as well as grasping a spare part and placing it so as to face stub base.

Said second embodiment mainly differs from first embodiment, for what concerns the way of softening both spare part **124** and stub base **126.** Indeed this softening is carried out using an operation of the friction stir welding (FSW) type. In a way known as such, friction stir welding is a solid-state full contact weld. During formation of a FSW butt joint, a non-consumable rotating welding accessory is used to join two adjacent metal plates. Heat is generated through friction and plastic deformation of workpiece, which tends to soften the latter. However, contrary to other types of welding, the material of said workpiece is substantially not molten. As explained hereinafter, no welding accessory is used in the present invention.

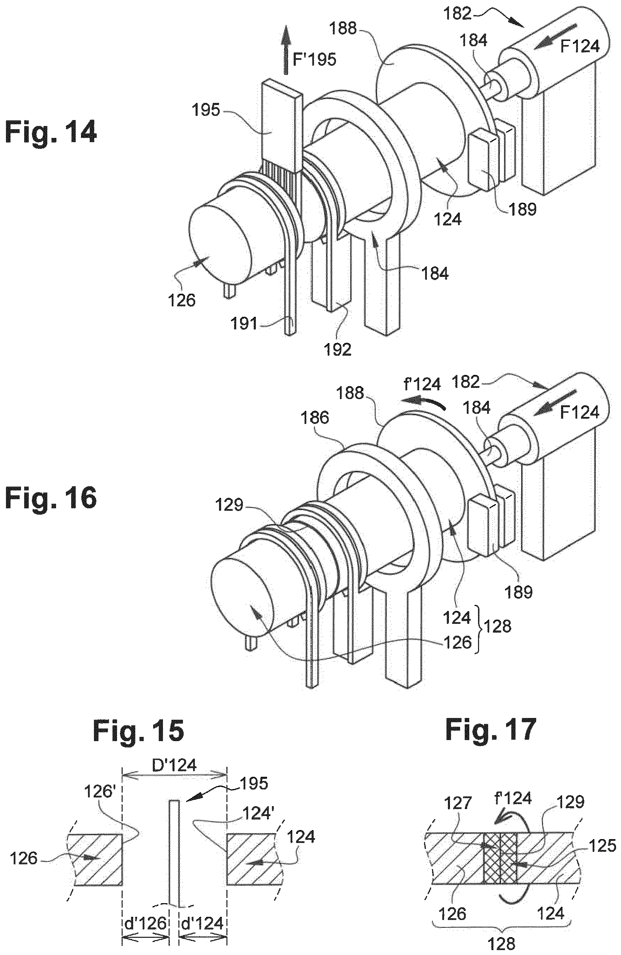

According to an advantageous feature, both spare part **124** and stub base **126** are first submitted to a so-called preheating step. Figures 13 to 15 show the structure of the mechanical elements, which make it possible to carry this preheating. First a heating member **195,** which is similar to that **95,** is provided between the free faces **124'** and **126'** along arrow F195. Distances d'124, d'126 and D'124 of figure 15 are chosen in the same ranges as d'24, d'26 and D'24, shown on figure 11. Moreover heating coils **191** and **192** are wrapped around respectively spare part **124** and stub base **126;** in an advantageous embodiment they are not in physical contact with the surface of the stub base **126,** the heat transfer being radiative.

It is to be noted that the temperature of this preheating is inferior to that of the heating step of the first embodiment. In this respect, temperature T124 of elements **124** and **126** are significantly below melting temperature Tm.

Due to this relatively low preheating temperature, free faces **124'** and **126'** are not molten. Therefore, neither spare part nor stub base is provided with a molten zone, similar to those **25** and **27** of the first embodiment.

Once this preheating stage has been carried out, spare part and stub base are brought into mutual contact. In this respect, heating member is removed along arrow F'195 and spare part is axially moved along arrow F124 (see figures 14 and 16). In view of friction stir welding process, this spare part is then rotated with respect to stub base, while pressure is applied along the arrow F124. To this end, the installation comprises a rotating tool **182,** which is in particular provided with a spindle **184** adapted to engage spare part **124.** The installation also advantageously comprises an annular support **186,** adapted to cooperate with spare part, so as to hold this part and ease its axial motion. A disc **188,** which is removable mounted on said spare part, is further adapted to cooperate with a fixed jaw **189** to stop the rotation of spare part when necessary.

Contrary to the motions according to arrows f24 and f'24, rotation f'124 of part **124** (see figures 16 and 17) is carried out at a high speed and over a high number of revolutions. By way of example said rotation speed is between about 100 rpm (revolutions per minute) about 10 000 rpm. In addition, the duration of this rotation stage is typically between about 10 sec and about 5 minutes. At the end of this stage, spare part and stub base are partially softened. Figure 17 shows softened zones **125** and **127,** which extend from respective free faces **124'** and **126'.** As above mentioned, these free faces are substantially not molten, contrary to faces **24'** and **26'.** The contacting surface of softened zones **125** and **127** forms a welding joint **129,** which makes it possible to mutually attach parts **124** and **126** so as to create a new stub **128.**

This second embodiment brings about specific advantages. The applicant has observed that compared to the method of the first embodiment, the welding process is more reliable and has a better reproducibility. Compared to a process relying exclusively on friction stir welding, the pressure applied during friction stir welding is far less, due to preheating by the heating means; this considerably simplifies the equipment necessary for holding the workpieces, rotating the spare part and applying the axial pressure.

## Claims

1. A maintenance method of an anode yoke (1; 101) for use in an electrolytic cell for the electrolytic production of aluminium using the Hall-Heroult process, said yoke being intended to mechanically and electrically link at least one carbon anode and an anode rod (14), said yoke comprising:
- a body (10; 110) intended to be connected to said anode rod, and
- a plurality of arms (12; 112) which extends each from said body, each arm being intended to be connected to said anode, wherein each arm comprises a distal portion, so-called "stub" (20; 120), intended to be inserted in an orifice, so-called "stub hole", provided in said anode,
wherein at least one stub is a so-called "worn stub" (22) being in a worn state, and wherein a yoke having at least one worn stub is called a "worn yoke",
said method comprising:
- handling said worn yoke, provided with said worn stub (22), from a storage station (6) to a working station (7),
- removing a worn end (23) of said stub, so as to form a stub base (26; 126),
- holding a spare part (24) , the size and shape of said spare part being adapted to form a new stub (28; 128) with said base,
- locally softening said base and said spare part, thereby forming a so-called softened zone (25; 125) of said spare part, at the vicinity of a free face (24'; 124') of said spare part, and a so-called softened zone (27; 127) of said base, at the vicinity of a free face (26'; 126') of said base facing said free face of spare part,
- bringing into contact said base and said spare part,
- so that these softened zones, being in mutual contact, might form said new stub (28; 128).

2. A maintenance method according to claim 1, **characterized in that** softening step of said base and said spare part is carried out after said zones have been brought into contact, said step of bringing into contact said zones (125, 127) being carried out in a substantially not molten state of said zones.

3. A maintenance method according to preceding claim, wherein softening step comprises rotating at least one of said base (126) and said spare part (124) around its main longitudinal axis, at a rotation speed and during a rotation duration, which are adapted to locally soften said base and said spare part so as to form said softened zones (125, 127).

4. A maintenance method according to any of claims 2 to 3, comprising a preheating step of said base and said spare part, before bringing them into contact, said preheating step being carried out at a first range of temperatures, below melting temperature of said zones.

5. A maintenance method according to claim 1, **characterized in that** softening step of said base (26) and said spare part (24) is carried out before step of bringing into contact said zones (25, 27), and preferably **characterized in that** softening said base and said spare part comprises heating said base and said spare part at a second range of temperature, which is close to the melting temperature of said base and said spare part, so that softened zones are substantially molten zones.

6. A maintenance method according to claim 5, further comprising moving said base and spare part with respect to each other, after bringing into contact said substantially molten zones (25, 27), so as to ease forming new stub.

7. A maintenance method according to any preceding claim, **characterized in that** bringing into contact said spare part and said base comprises moving axially (arrow F24; arrow F124) spare part (24 ; 124).

8. A maintenance method according to any of claims 4 to 7, **characterized in that** it comprises heating or preheating simultaneously said base and said spare part, said heating or preheating being possibly carried out with same heating means (9 ; 95; 195).

9. A maintenance method according to any preceding claim, **characterized in that** said handling said yoke comprises tilting said anode hanger (f16) from a first position to a second position.

10. A maintenance method according to claim 9, **characterized in that** first position is a vertical position of said anode hanger, whereas second position is a horizontal position of said anode hanger.

11. A maintenance installation, intended to the maintenance of an anode yoke (1; 101) for use in an electrolytic cell for the electrolytic production of aluminium using the Hall-Héroult process, said yoke being intended to mechanically and electrically link at least one carbon anode and an anode rod (14), said yoke comprising:
- a body (10; 110) intended to be connected to said anode rod, and
- a plurality of arms (12; 112), each arm being intended to be connected to said anode, wherein each arm comprises a distal portion (20; 120) (so-called "stub"), intended to be inserted in an orifice (so-called "stub hole") provided in said anode, said installation comprising:
- a storage station (6), for storing at least one so called worn yoke comprising at least one stub (22) that is in a so-called worn state,
- a working station (7),
- handling means (3) adapted to handle said worn yoke, from said storage station to said working station,
- removing means adapted to remove worn end (23) of said stub, so as to form a stub base (26; 126),
- a spare station (8), provided with a plurality of spare parts (24; 124) adapted to cooperate with said stub base,
- holding means (4) adapted to hold at least one of said spare parts,
- softening means (9 ; 95; 182), adapted for locally soften said base and said spare part, so as to form a so-called softened zone (25; 125) of said spare part, at the vicinity of a free face (24'; 124') of said spare part, and a so-called softened zone (27; 127) of said base, at the vicinity of a free face (26'; 126') of said base facing said free face of spare part,
- moving means (46,48) adapted to move at least one of said spare part and base in view of contacting softened zones (25,27; 125, 127) of said spare part and base, so as to form said new stub (28; 128).

12. A maintenance installation according to preceding claim, wherein softening means (182) are adapted to rotate at least one of said base and said spare part around its main longitudinal axis, at a rotation speed being high enough to locally soften said base and said spare part so as to form said softened zones (125, 127), said softened zones being substantially not molten zones,
and said maintenance installation preferably being provided with softening means (182) comprising a rotating tool (182) provided with a spindle (184) adapted to engage spare part (184),
and/or said maintenance installation preferably being provided with a robot (5).

13. A maintenance installation according to claim 11, wherein softening means are heating means (9 ; 95) adapted to heat said base (26) and said spare part (24), at a temperature which is high enough to form said softened zones (25, 27) being substantially molten zones.

14. A maintenance installation according to one of claims 11 to 13, **characterized in that** said heating means (9) comprise one single support (90) and either two heating elements (91,92), each for heating respectively spare part and stub base, or one single heating element (97), for heating both spare part and stub base.

15. An aluminium electrolysis plant comprising at least one line of electrolysis cells of substantially rectangular shape, and said plant further comprising means for electrically connecting said cells in series and for connecting the cathodic busbar of a cell to the anode beam of a downstream cell,
**characterized in that** said plant is equipped with at least a maintenance installation according to one of claims 11 to 14.
